# EUROPÄISCHE PATENTSCHRIFT

(11) **EP 1 931 490 B1**
(45) Veröffentlichungstag und Bekanntmachung des Hinweises auf die Patenterteilung: **09.12.2015**
(21) Anmeldenummer: 06840861.6
(22) Anmeldetag: 04.10.2006
(51) Int. Cl.: B23D 77/00, B23D 77/12, B23P 15/46, B23G 5/20

(54) **SPANABTRAGENDES WERKZEUG**
CHIP REMOVING TOOL
OUTIL D'ENLÈVEMENT DE COPEAUX

(30) Priorität: 04.10.2005 DE 102005047510
(43) Veröffentlichungstag der Anmeldung: 18.06.2008
(73) Patentinhaber: Gühring KG, 72458 Albstadt (DE)
(72) Erfinder: BOZKURT, Lutfi, 72474 Winterlingen (DE)
(74) Vertreter: Winter, Brandl, Fürniss, Hübner, Röss, Kaiser, Polte - Partnerschaft mbB
(86) Internationale Anmeldenummer: PCT/DE2006/001740
(87) Internationale Veröffentlichungsnummer: WO 2007/045205

(56) Entgegenhaltungen:
- EP-A2- 1 008 411
- CH-A- 433 916
- DE-U1- 20 101 101
- DE-U1- 20 300 520
- GB-A- 844 485
- GB-A- 1 172 480
- US-A- 2 369 273
- US-A- 3 080 777
- US-A1- 2005 095 072
- AGARICO J: "REIBWERKZEUGE AUS EINEM GUSS" WERKSTATT UND BETRIEB, CARL HANSER VERLAG, MUNCHEN, DE, Bd. 134, Nr. 7/8, August 2001 (2001-08), Seiten 44,46-47, XP001101261 ISSN: 0043-2792

## Beschreibung

Die vorliegende Erfindung betrifft ein Werkzeug nach dem Oberbegriff des Anspruchs 1. Ein solches Werkzeug ist aus der US 2005/0095072 A bekannt.

### Stand der Technik

Werkzeuge zur spanabtragenden Bearbeitung mit einem Werkzeugkopf und einem Werkzeugschaft mit einem Einspannabschnitt zur Aufnahme in eine Werkzeugaufnahme sind in vielfältigster Form bekannt. Um hohe Fertigungsqualitäten zu gewährleisten, muss das Werkzeug auf die jeweiligen Einsatzparameter abgestimmt werden. Insbesondere muss ein spanabtragendes Werkzeug zur Bearbeitung für vorgegebene Werkstoffe geeignet sein bzw. die geforderten Schnittparameter erfüllen können. Beispielsweise können beim Bohren relativ hohe Schnittgeschwindigkeiten bzw. Vorschübe gefordert sein. Die Werkzeuge, welche in der Regel in einem weiten Bereich unterschiedlicher Durchmesserabmessungen zur Verfügung stehen müssen, sollen insbesondere mechanisch und thermisch relativ stark belastbar sein.

### Aufgabe und Vorteile der Erfindung

Aufgabe der Erfindung ist es, ein Werkzeug zur spanabtragenden Bearbeitung bereitzustellen, dessen Anwendungsbereiche erweitert werden können, wobei vergleichsweise hohe Fertigungsqualitäten erzielbar sind. Insbesondere soll das Werkzeug eine vergleichsweise hohe Verschleißfestigkeit auch bei der Bearbeitung von besonders widerstandsfähigen Materialien aufweisen.

Diese Aufgabe wird durch die Merkmale des unabhängigen Anspruchs 1 gelöst. Wie beansprucht, wird ein Werkzeug zur spanabtragenden Bearbeitung bereitgestellt. Das Werkzeug umfasst einen Werkzeugkopf mit aus dem Material des Werkzeugkopfs bestehenden Werkzeugschneiden sowie einen Werkzeugschaft mit einem zylindrischen Einspannabschnitt, der zur Aufnahme in eine Werkzeugaufnahme ausgebildet ist und sich an seinem vorderen Ende über einen Rundkegelabschnitt zu einem zylindrischen Verlängerungsabschnitt, der konzentrisch zum Einspannabschnitt angeordnet ist, verjüngt. Der Werkzeugkopf ist als separates Teil am Werkzeugschaft angebracht und ist einstückig aus einem Hartmaterial mit zumindest einer Funktionsschicht, die einen Superhartstoff wie beispielsweise CBN oder PKD umfasst. Am vorderen Ende des Verlängerungsabschnitts ist ein konzentrisch dazu angeordneter Zapfenabschnitt mit kreisrundem Querschnitt und einer an seinem vorderen Ende ausgebildeten ebenen und im Wesentlichen senkrecht zu einer Längsachse ausgerichteten Stirnfläche sowie einem Absatz mit einer den Zapfenabschnitt umgebenden ringförmigen Gegenfläche realisiert.

Erfindungsgemäß weist der Werkzeugkopf an seinem hinteren Ende eine als zylindrische Sacklochbohrung mit einer Grundfläche ausgebildete Vertiefung und eine die Sacklochbohrung umgebende ringförmige Anlagefläche auf und ist auf den Zapfen aufgesteckt. Ferner liegt bei vollständigem Aufstecken des Werkzeugkopfs auf den Zapfenabschnitt die ringförmige Anlagefläche bündig bzw. wenigstens nahezu spaltfrei an der ringförmigen Gegenfläche des Absatzes an.

Für eine Löt- bzw. Klebeverbindung des Werkzeugkopfes am Zapfenabschnitt kann (a) ein gegebenenfalls auftretender Spaltbereich zwischen der Anlagefläche (12) und der Gegenfläche (13), (b) ein durch die Abmaße des Zapfenabschnitts (8) bzw. der Sacklochbohrung (11) zwischen der umfänglichen Außenseite des Zapfenabschnitts (8) und der Innenwandung der Sacklochbohrung (11) ausgebildeter umfänglicher Ringspalt und (c) ein Spalt zwischen der Stirnfläche (10) des Zapfenabschnitts (8) und der Grundfläche (14) der Sacklochbohrung (11) ausgebildeter Spalt mit Löt- bzw. Klebematerial aufgefüllt sein.

In den Unteransprüchen sind vorteilhafte und zweckmäßige Weiterbildungen der Erfindung angegeben.

Die Erfindung geht zunächst aus von einem Werkzeug zur spanabtragenden Bearbeitung, insbesondere Bohr-, Fräs- oder Reibwerkzeug, mit einem Werkzeugkopf mit aus dem Material des Werkzeugkopfs bestehenden Werkzeugschneiden sowie einem Werkzeugschaft mit einem Einspannabschnitt zur Aufnahme in eine Werkzeugaufnahme. Ein wesentlicher Aspekt der Erfindung zeichnet sich dadurch aus, dass der Werkzeugkopf als separates Teil am Werkzeugschaft angebracht ist und einstückig aus einem Hartmaterial mit zumindest einer Funktionsschicht besteht, die einen Superhartstoff wie beispielsweise kubisches Bornitrid (CBN) oder polykristalliner Diamant (PKD) umfasst. Damit kann ein vergleichsweise hoch standfestes Werkzeug im Hinblick auf mechanische bzw. thermische Anforderung zum Bohren, Fräsen bzw. Reiben bereitgestellt werden. Der Werkzeugkopf muss dazu nicht aus mehreren Teilen zusammengesetzt werden, sondern kann aus einem Bauteil bestehen. Insbesondere werden keine gesonderten Schneidplatten oder dgl. benötigt, die eine Funktionsschicht enthalten oder monolithisch aus dieser bestehen, sondern der gesamte Werkzeugkopf einschließlich der Schneiden wird aus dem harten Material, welche die Funktionsschicht umfasst, hergestellt. Damit spart man sich das Bereitstellen und nachträgliche Anbringen der Schneidplatten am Werkzeugkopf. Der besonders stark beanspruchte Werkzeugkopf weist aufgrund der Funktionsschicht eine enorme Verschleißfestigkeit auf, auch bei der Bearbeitung von sehr widerstandsfähigen Materialien. Im einfachsten Fall kann genau eine Funktionsschicht aus kubischem Bornitrid oder polykristallinem Diamant vorgesehen sein bzw. der gesamte Werkzeugkopf monolithisch aus CBN oder PKD bestehen. Gegebenenfalls können gegenüber bisher eingesetzten Werkzeugen höhere Standwege bzw. -zeiten mit dem vorgeschlagenen Werkzeug erreicht werden. Beispielsweise kann eine Funktionsschicht aus Superhartstoff wie CBN oder PKD z.B. in Kombination mit einem Trägermaterial aus z.B. Vollhartmetall bereitgestellt werden, wobei die Funktionsschicht regelmäßig höhere Verschleißfestigkeiten aufweist, als ein Keramik-, Cermet- oder Vollhartmetall-Material. Es können auch mehrere Funktionsschichten CBN oder PKD beispielsweise in unterschiedlichen Dicken bzw. Stärken ausgebildet sein. Grundsätzlich kann eine Funktionsschicht ggf. der komplette Kopf vollständig bzw. einheitlich aus CBN oder PKD bestehen oder auch aus mehreren Komponenten mit einem Hauptbestandteil aus CBN oder PKD. Zum Beispiel können CBN- oder PKD-Partikel in einem Binde- oder Trägermaterial verteilt sein und beispielsweise pulvermetallurgisch durch Sintern hergestellt sein.

Die wenigstens eine Funktionsschicht kann in Form einer Beschichtung aufgebracht sein oder als durchgängige Schicht im Werkzeugkopf ausgebildet sein. Bei mehreren Funktionsschichten können diese miteinander fest verbunden bzw. mit einer Schicht aus einem anderen Hartmaterial ausgebildet sein. Insbesondere bei kleineren Werkzeugkopfdurchmessern unter ca. 6 mm, kann es vorteilhaft sein, dass der Werkzeugkopf nahezu vollständig gegebenenfalls sogar vollständig aus einem Material besteht, z.B. aus der Funktionsschicht aus CBN oder PKD gebildet wird bzw. diese mit einem Vollhartmetallträger verbunden ist.

Außerdem geht die Erfindung aus von einem Werkzeug zur spanabtragenden Bearbeitung, insbesondere Bohr-, Fräs- oder Reibwerkzeug, mit einem Werkzeugkopf mit aus dem Material des Werkzeugkopfs bestehenden Werkzeugschneiden, wobei der Werkzeugkopf einen Außendurchmesser bis zu 6 mm aufweist, sowie einem Werkzeugschaft mit einem Einspannabschnitt zur Aufnahme in eine Werkzeugaufnahme. Ein weiterer wesentlicher Aspekt der Erfindung liegt dabei darin, dass der Werkzeugkopf als separates Teil an dem Werkzeugschaft angebracht ist und zumindest vier über den Umfang des Werkzeugkopfs angeordnete Werkzeugschneiden besitzt. Damit können auch bei vergleichsweise sehr geringen Werkzeugkopfdurchmessern hoch effiziente Bohr-, Fräs- oder Reibwerkzeuge zur Verfügung gestellt werden. Insbesondere ist es damit wirtschaftlich möglich, vier oder mehr Werkzeugschneiden für z.B. Bohrungsdurchmesser von 6 mm oder kleiner bereitzustellen, was bisher durch die relativ geringen Werkzeugkopfabmessungen nicht praktikabel war. Durch die vergleichsweise höhere Anzahl an Werkzeugschneiden kann auch eine damit verbundene höhere Bearbeitungsqualität der Bohrungen von 6 mm und kleiner bzw. eine bessere umfängliche Führung des Werkzeugs in dem zu bearbeitenden Material erzielt werden. Der Werkzeugkopf kann durch die Einstückigkeit vorteilhaft hergestellt werden. Insbesondere kann der Werkzeugkopf unabhängig von dem Werkzeugschaft produziert bzw. geformt werden.

Besonders vorteilhaft ist es, wenn der Werkzeugkopf aus einem Hartmaterial mit zumindest einer Funktionsschicht aus CBN oder PKD besteht. Der Werkzeugkopf kann durch die Funktionsschicht höchste Anforderungen im Hinblick auf Verschleißfestigkeit erfüllen, wobei eine ebenfalls notwendige Zähigkeit des Werkzeugkopfes z.B. durch ein entsprechendes Hartmaterial erreicht wird, welches mit der Funktionsschicht versehen ist. Bereits genau eine Funktionsschicht aus CBN oder PKD kann zu einer signifikanten Verbesserung im Hinblick auf diese Eigenschaften führen. Prinzipiell sind jedoch auch mehrere unterschiedliche Schichten bzw. unterschiedliche Dicken von Funktionsschichten im Werkzeugkopf in Kombination mit einem oder mehreren Trägermaterial(ien) denkbar. Eine besonders vorteilhafte Ausgestaltung wird durch einen Zweischicht-Werkzeugkopf erfüllt, der auf der zum Werkzeugschaft gerichteten Seite aus einer Schicht aus Vollhartmetall mit einer fest verbundenen vorderen Schicht aus CBN besteht. Ein homogener Aufbau des Kopfs aus einer Funktionsschicht, die Superhartstoff umfasst oder vollständig aus diesem besteht, ist auch denkbar. Besonders vorteilhaft ist es, dass in einem Schichtaufbau des Hartmaterials die Schichten untereinander versintert sind. Damit kann ein besonders fester Schichtverbund im Werkzeugkopf und damit eine hohe Stabilität erzielt werden. Insbesondere können damit vorteilhaft einsetzbare Sintermaterialien in die fertige Gefügeform gebracht und gleichzeitig fest im Schichtaufbau fixiert werden.

Erfindungsgemäß ist der Werkzeugkopf mit einer Vertiefung zur Anbringung an den Werkzeugschaft ausgebildet, mit welcher ein dazu passender Einsteckabschnitt des Werkzeugschafts verbunden werden kann. Damit lässt sich sicher und vergleichsweise einfach eine Anbringung des Werkzeugkopfes am Werkzeugschaft realisieren. Eine einfache Sacklochbohrung wird im Werkzeugkopf vorgesehen, und ein dazu passend ausgebildeter Stiftabschnitt wird am Werkzeugschaft vorgesehen . Durch einen einfachen Aufsteckvorgang kann bereits ein Haltesitz erzielt werden, in welchem der Werkzeugkopf präzise ausrichtbar und anschließend durch geeignete Verbindungstechniken am Werkzeugschaft fest fixierbar ist. Hier sind beispielsweise Löt-, Sinter-, Schweiß- oder Klebverfahren vorstellbar.

Eine bevorzugte Ausgestaltung des Erfindungsgegenstandes zeichnet sich dadurch aus, dass zum Werkzeugkopf beabstandet in Längsrichtung des Werkzeugs eine Nachbearbeitungseinheit am Werkzeugschaft ausgebildet ist. Damit kann beispielsweise der Werkzeugkopf als Bohrerkopf ausgebildet sein und zur Nachbearbeitung der Bohrung ein auf den Bohrungsdurchmesser abgestimmter Reibahlen-Kopf am Werkzeugschaft etwas versetzt zum Bohrerkopf in Richtung des Einspannabschnitts vorgesehen sein. Damit lässt sich in einem Hub eine Bohrung erstellen und über einen Teil der Bohrungstiefe eine Nachbearbeitung der Innenwandung der Bohrung durch Reiben realisieren.

Ein nicht erfindunsgemäßer Gesichtspunkt geht von einem Verfahren zur Herstellung eines Werkzeugkopfes für ein Werkzeug zur spanabtragenden Bearbeitung aus, der an einen Werkzeugschaft fixierbar ist, insbesondere zur Herstellung eines Werkzeugkopfs für ein oben genanntes Werkzeug. Dabei liegt der Hauptaspekt darin, dass der Werkzeugkopf aus einem Hartmaterial-Rohling hergestellt wird, wobei der Werkzeugkopf durch Nachbearbeiten des Hartmaterial-Rohlings, insbesondere durch einen Schleifvorgang von Teilbereichen zu einer Fertigkontur des Werkzeugkopfs bearbeitet wird. Der Werkzeugkopf lässt sich dadurch besonders einfach herstellen. Insbesondere besteht der Werkzeugkopf aus einem Stück, beispielsweise aus einem Material oder aus mehreren Materialien, beispielsweise aus einem Grundmaterial im Schichtaufbau herausgearbeitet. Bisher müssen Werkzeugköpfe in der Regel vergleichsweise aufwändig hergestellt werden. Beispielsweise werden in einen Grundkörper des Werkzeugkopfes Aufnahmenuten für die Schneiden an entsprechenden Stellen eingearbeitet, welche präzise an die einzubringenden Schneidenabmessungen angeglichen sein müssen. Anschließend werden passend vorbearbeitete Schneidplatten oder dergleichen eingesetzt und fest in den Nuten befestigt, wobei die Schneiden ebenfalls mit hoher Maßhaltigkeit ausgeformt sein müssen. Werden die Schneidplatten und dgl. am Grundkörper angeschraubt, müssen außerdem Bohrungen in den Schneidplatten und dem Grundkörper des Werkzeugkopfs eingebracht werden, mit welchen nach dem Einsetzen der Schneidplatten ein Verschrauben stattfinden kann. Wird keine Schraub- oder Klemmverbindung zwischen den Schneidplatten und dem Grundkörper genutzt, kann dies durch Löten, Schweißen, Kleben oder dergleichen erfolgen. Insgesamt ist diese Vorgehensweise technisch und wirtschaftlich aufwändig. Durch die Bereitstellung des Hartmaterial-Rohlings, bei welchem eine Grundform des Werkzeugkopfs oder eine sehr nahe an die Endform des Werkzeugkopfs herankommende Form verwendet wird, kann die Herstellung maßgeblich vereinfacht werden.

Das Verfahren zeichnet sich dadurch aus, dass der Werkzeugkopf in Form des Hartmaterial-Rohlings an dem Werkzeugschaft fixiert wird und anschließend zu der Fertigkontur bearbeitet wird. Damit kann der am Werkzeugschaft fixierte Rohling besonders präzise nachbearbeitet werden. Im Hinblick auf die Orientierung der geschliffenen Flächen und Kanten bezüglich des fertigen Werkzeugs ist dies vorteilhaft. Denn mit der festen Fixierung des Werkzeugkopfs befindet sich der Werkzeugkopf in seiner endgültigen Position am Werkzeugschaft und kann insbesondere exakt symmetrisch bzw. rotationssymmetrisch zur Längsachse des Werkzeugs beschliffen werden.

Zur Fertigbearbeitung von Schneiden und/oder Freiflächen am Werkzeugkopf kann es vorteilhafterweise ausreichend sein, dass der Hartmaterial-Rohling lediglich beschliffen wird. Damit können Werkzeugkopf-Bereiche bzw. -Fachen oder -Kanten, die besonders maßgenau sein müssen, hochpräzise und praktikabel realisiert werden.

Schließlich ist es vorteilhaft, dass der Hartmaterial-Rohling aus einer Hartmaterialplatte herausgearbeitet wird. Die Hartmaterialplatte kann eine Funktionsschicht aus CBN oder PKD umfassen oder monolithisch aus CBN oder PKD bestehen. Damit kann die Ausgangsform für die Weiterverarbeitung zum Hartmaterial-Rohling vergleichsweise wirtschaftlich vorteilhaft bereitgestellt werden. Besonders zweckmäßig ist es, wenn der Hartmaterial-Rohling aus einem plattenartigen Material herausgearbeitet ist, z.B. durch Erodieren oder Laserschneiden.

### Zeichnung und Beschreibung des Ausführungsbeispiels

Anhand der in der Zeichnung dargestellten Figuren werden weitere Merkmale und Vorteile der Erfindung beschrieben.

Im Einzelnen zeigt
- Figur 1: eine erfindungsgemäße Reibahle in Seitenansicht;
- Figur 2: eine Vorderansicht der in Figur 1 gezeigten Reibahle in Pfeilrichtung P1 gemäß Figur 1 betrachtet;
- Figur 3a: einen Reibahlenkopf der in Figur 1 dargestellten Reibahle in einer Unteransicht;
- Figur 3b: den Reibahlenkopf gemäß Figur 3a im Schnitt gemäß der Schnittlinie A-A aus Figur 1;
- Figur 4: ein Trägerteil der in Figur 1 gezeigten Reibahle in Seitenansicht und
- Figur 5: eine Vorderansicht des in Figur 4 gezeigten Trägerteils in Pfeilrichtung P2 gemäß Figur 4 betrachtet.

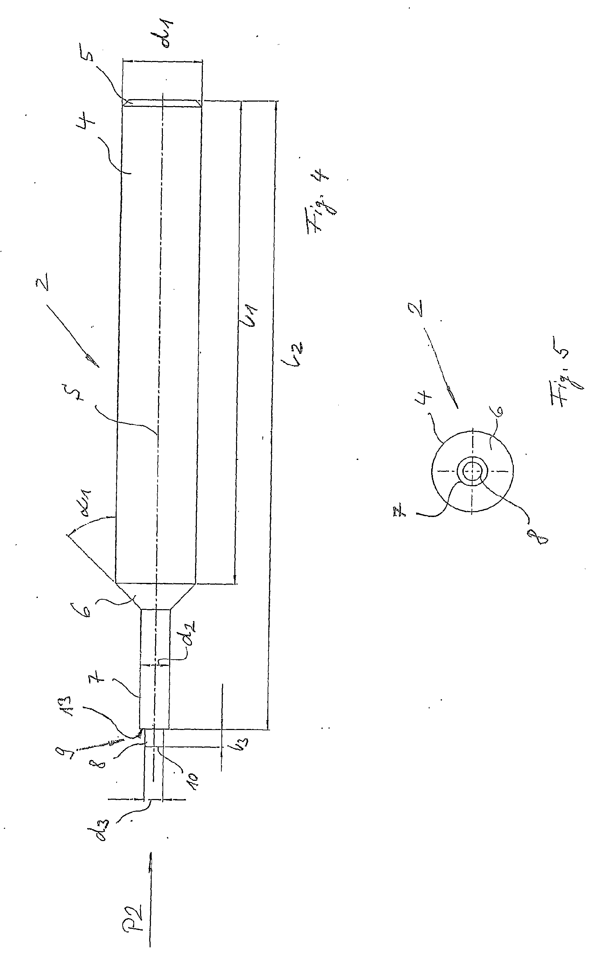

Ein Ausführungsbeispiel des erfindungsgemäßen Werkzeuges zur spanabtragenden Bearbeitung ist beispielhaft als Reibahle 1 gezeigt. Die Reibahle 1 umfasst ein in Figur 4 und 5 gezeigtes einstückiges Trägerteil 2 aus z.B. Vollhartmetall, an dessen vorderem Abschnitt ein Reibahlenkopf 3 aufgesetzt und mit dem Trägerteil 2 fest verbunden angebracht ist. Im gezeigten Ausführungsbeispiel ist der Reibahlenkopf 3 ebenfalls einstückig und besteht einheitlich aus einem Hartmaterial, z.B. aus kubischem Bornitrit (CBN). Das Trägerteil 2 kann beispielsweise aus einem Werkzeugstahl, aus Vollhartmetall oder aus anderen Materialien bestehen, ggf. aus mehreren unterschiedlichen Materialien. Prinzipiell ist auch ein Aufbau aus unterschiedlichen Materialien sowohl des Trägerteils 2 als auch des Reibahlenkopfs 3 möglich, z.B. in Form eines Schichtaufbaus bzw. als beschichtetes Material.

Das Trägerteil 2 weist zum Einspannen in eine Werkzeugaufnahme einen zylindrischen Einspannabschnitt 4 mit einem Außendurchmesser d₁ auf, welcher eine Fase 5 am hinteren Ende des Einspannabschnitts 4 zeigt. Grundsätzlich ist auch eine andere Ausführung des Abschnitts am Werkzeug für das Einspannen in eine Werkzeugaufnahme denkbar, z.B. um in ein Bohrfutter, eine Spannzange oder eine Klemmhülse eingespannt werden zu können.

Am vorderen Ende des Einspannabschnitts 4 verjüngt sich das Trägerteil 2 über einen Rundkegelabschnitt 6 bis zu einem zylindrischen Verlängerungsabschnitt 7 mit einem Außendurchmesser d₂ kleiner als d1 ist. Beispielsweise kann im gezeigten Ausführungsbeispiel d₁ ca. 6 mm und d₂ ca. 2,2 mm betragen. Die Neigung der Flanke des Rundkegelabschnitts 6 kann gegenüber einer Längsachse S des Trägerteils 2 und der Reibahle 1 bzw. gegenüber der Außenseite des Einspannabschnitts 4 einen Winkel α1 ausbilden, welcher im dargestellten Beispiel ca. 45° beträgt.

Am vorderen Ende des Verlängerungsabschnitts 7, der konzentrisch zum Einspannabschnitt 4 angeordnet ist, ist ein konzentrisch zum Verlängerungsabschnitt 7 angeordneter Zapfenabschnitt 8 mit kreisrundem Querschnitt realisiert. Der Zapfenabschnitt 8 ist gegenüber dem Verlängerungsabschnitt 7 über einen Absatz 9 radial nach innen abgesetzt und weist einen Außendurchmesser d₃ auf, der etwas geringer als der Durchmesser d₂ des Verlängerungsabschnitts 7 ist, hier z.B. ca. 1,4 mm. Der Zapfenabschnitt 8 weist an seinem Vorderende eine ebene und im Wesentlichen senkrecht zur Längsachse S ausgerichtete Stirnfläche 10 auf.

Zur Fertigstellung der Reibahle 1 wird z.B. ein vorfabrizierter Rohling, welcher später zum Fertigen des Reibahlenkopfs 3 bearbeitet wird, oder der bereits vollständig fertiggestellte Reibahlenkopf 3 auf das Trägerteil 2 am Zapfenabschnitt 8 aufgesetzt und fest am Trägerteil 2 fixiert. Dies kann auf unterschiedliche Weise geschehen, beispielsweise durch Löten, Sintern, Kleben, Schweißen usw..

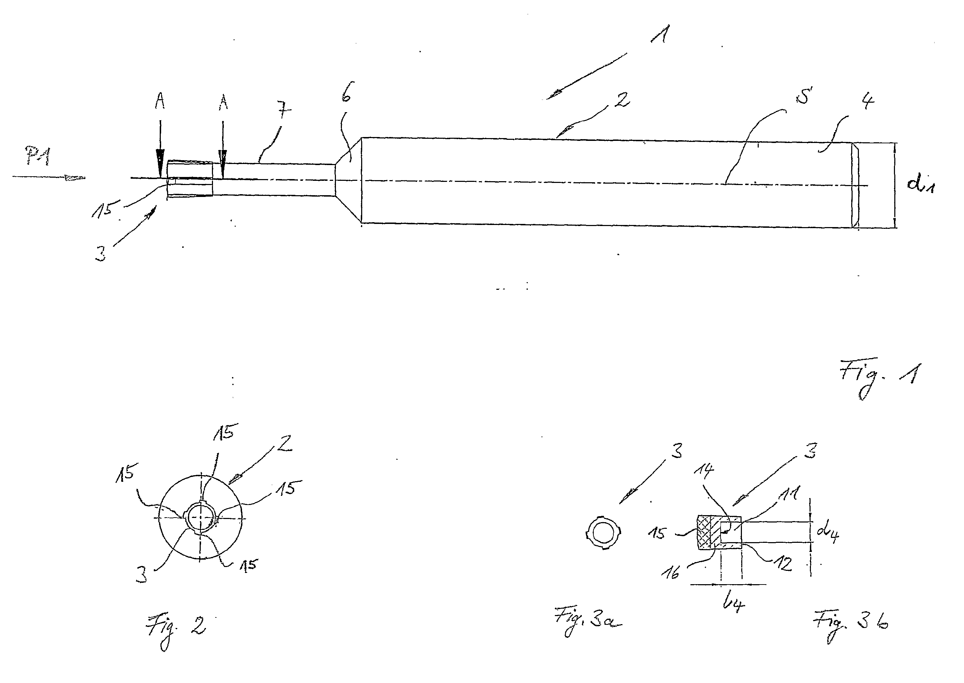

Nach der Anbringung des Reibahlenkopfs 3 bzw. eines Rohlings ergibt sich eine Reibahle 1 gemäß Fig. 1 und Fig. 2. In Fig. 3a und Fig. 3b ist der zumindest größtenteils vorgefertigte Reibahlenkopf 3 im Detail als Einzelteil dargestellt. Um den Reibahlenkopf 3 sicher und fest am Zapfenabschnitt 8 des Trägerteils 2 befestigen zu können, zeigen die miteinander zu verbindenden Abschnitte jeweils eine entsprechend aufeinander abgestimmte Formgebung. Der Reibahlenkopf 3 weist an seinem hinteren Ende eine Vertiefung auf, welche als zylindrische Sacklochbohrung 11 ausgebildet ist, die im angebrachte Zustand des Reibahlenkopfs 3 konzentrisch zur Längsachse des Reibahlenkopfs 3 verläuft. Die Sacklochbohrung 11 ist so auf den Zapfenabschnitt 8 abgestimmt, dass der Reibahlenkopf 3 durch Aufstecken auf den Zapfenabschnitt 8 bzw. dessen Eingreifen in die Sacklochbohrung 11 und durch geeignete Verbindungsverfahren fest an dem Trägerteil 2 fixierbar ist. Der Reibahlenkopf 3 ist zweischichtig aus einer vorderen Hartschicht 15 aus CBN mit einer Schichtdicke von z.B. ca. 1 mm, und einem hinteren Basisabschnitt 16 aus Vollhartmetall mit einer Dicke von ca. 2 mm.

In der gezeigten Ausführungsform ist die Tiefe l₄ der Sacklochbohrung 11 in Längsrichtung des Reibahlenkopfs 3 mit ca. 1,5 mm vergleichsweise geringfügig größer als die axiale Länge l₃ des Zapfenabschnitts 8, die ca. 1,3 mm beträgt. Ebenso ist der Innendurchmesser d₄ der Sacklochbohrung 11 mit ca. 1,5 mm geringfügig größer, als der Durchmesser d₃ des Zapfenabschnitts 8 mit ca. 1,4 mm.

Bei vollständig aufgestecktem Reibahlenkopf 3 auf den Zapfenabschnitt 8 liegt insbesondere eine ringförmige Anlagefläche 12 am hinteren Ende des Reibahlenkopfs 3 bündig bzw. wenigstens nahezu spaltfrei an einer ebenfalls ringförmigen Gegenfläche 13 des Absatzes 9 an. Ein damit ggf. auftretender Spaltbereich kann beispielsweise zum Verlöten bzw. Verkleben des Reibahlenkopfs 3 am Zapfenabschnitt 8 mit entsprechendem Lot- bzw. Klebematerial gefüllt werden. Für eine Löt- bzw. Klebverbindung ist außerdem durch die entsprechenden Abmaße des Zapfenabschnitts 8 bzw. der Sacklochbohrung 11 ein umfänglicher Ringspalt zwischen umfänglichen Außenseite des Zapfenabschnitts 8 und der Innenwandung der Sacklochbohrung 11 bereitgestellt und ebenso ein Spalt zwischen der Stirnfläche 10 des Zapfenabschnitts 8 und einer Grundfläche 14 der Sacklochbohrung 11.

In Richtung der Längsachse S der Reibahle 1 bzw. des Trägerteils 2 kann die Länge l₁ des Einspannabschnitts 4 mehr als die Hälfte der Länge l₂ betragen, welche sich in Richtung der Längsachse S zwischen dem Absatz 9 und dem hinteren Ende des Trägerteils 2 bzw. des Einspannabschnitts 4 ergibt. Im gezeigten Ausführungsbeispiel beträgt die Länge l₁ ca. 36 mm und die Länge l₂ ca. 47 mm. Prinzipiell sind jedoch auch andere Längenverhältnisse möglich, insbesondere unterschiedliche Längenverhältnisse l₁ zu l₂, ebenso sind unterschiedliche Durchmesserverhältnisse d₁ zu d₂ zu d₃ insbesondere von d₁ und d₂ möglich.

Der Reibahlenkopf 3 ist beispielhaft vierschneidig mit vier gleichmäßig über den Umfang des Reibahlenkopfs 3 verteilten Schneiden 15 ausgebildet. Es sind jedoch auch mehr oder weniger Schneiden am Reibahlenkopf ausbildbar. Der Reibahlenkopf 3 kann als Vorprodukt des fertigen Reibahlenkopfs 3, zum Beispiel als Grünling aus einem Sintermaterial oder als Rohling, der aus einem Hartmaterial herauserodiert wurde, am Trägerteil 2 befestigt und anschließend fertigbearbeitet werden. Zur Fertigbearbeitung z.B. durch Schleifen können insbesondere die Schneiden bzw. Freiflächen präzise ausgestaltet werden.

### Bezugszeichenliste:

- 1: Reibahle
- 2: Trägerteil
- 3: Reibahlenkopf
- 4: Einspannabschnitt
- 5: Fase
- 6: Rundkegelabschnitt
- 7: Verlängerungsabschnitt
- 8: Absatz
- 9: Stirnfläche
- 10: Sacklochbohrung
- 11: Anlagefläche
- 12: Gegenfläche
- 13: Grundfläche
- 14: Schneide
- 15: Hartschicht
- 16: Basisabschnitt

## Patentansprüche

1. Werkzeug (1) zur spanabtragenden Bearbeitung, das einen Werkzeugkopf (3) mit aus dem Material des Werkzeugkopfs bestehenden Werkzeugschneiden (15) sowie einen Werkzeugschaft (4, 7, 8) mit einem zylindrischen Einspannabschnitt (4), der zur Aufnahme in eine Werkzeugaufnahme ausgebildet ist und sich an seinem vorderen Ende über einen Rundkegelabschnitt zu einem zylindrischen Verlängerungsabschnitt (7), der konzentrisch zum Einspannabschnitt angeordnet ist, verjüngt, aufweist, wobei der Werkzeugkopf (3) als separates Teil am Werkzeugschaft (4, 7, 8) angebracht ist und einstückig aus einem Hartmaterial mit zumindest einer Funktionsschicht besteht, die einen Superhartstoff wie beispielsweise CBN oder PKD umfasst,
wobei am vorderen Ende des Verlängerungsabschnitts (7) ein konzentrisch dazu angeordneter Zapfenabschnitt (8) mit kreisrundem Querschnitt und einer an seinem vorderen Ende ausgebildeten ebenen und im Wesentlichen senkrecht zu einer Längsachse (S) ausgerichteten Stirnfläche (10) sowie einem Absatz (9) mit einer den Zapfenabschnitt (8) umgebenden ringförmigen Gegenfläche (13) realisiert ist,
**dadurch gekennzeichnet, dass** der Werkzeugkopf (3) an seinem hinteren Ende eine als zylindrische Sacklochbohrung (11) mit einer Grundfläche (14) ausgebildete Vertiefung und eine die Sacklochbohrung (11) umgebende ringförmige Anlagefläche (12) aufweist und auf den Zapfenabschnitt (8) aufgesteckt ist,
und dass bei vollständigem Aufstecken des Werkzeugkopfs (3) auf den Zapfenabschnitt (8) die ringförmige Anlagefläche (12) bündig bzw. wenigstens nahezu spaltfrei an der ringförmigen Gegenfläche (13) des Absatzes (9) anliegt.

2. Werkzeug (1) nach Anspruch 1, **dadurch gekennzeichnet, dass** für eine Löt- bzw. Klebeverbindung des Werkzeugkopfes (3) am Zapfenabschnitt (8) (a) ein gegebenenfalls auftretender Spaltbereich zwischen der Anlagefläche (12) und der Gegenfläche (13), (b) ein durch die Abmaße des Zapfenabschnitts (8) bzw. der Sacklochbohrung (11) zwischen der umfänglichen Außenseite des Zapfenabschnitts (8) und der Innenwandung der Sacklochbohrung (11) ausgebildeter umfänglicher Ringspalt und (c) ein zwischen der Stirnfläche (10) des Zapfenabschnitts (8) und der Grundfläche (14) der Sacklochbohrung (11) ausgebildeter Spalt mit Löt- bzw. Klebematerial aufgefüllt ist.

3. Werkzeug nach Anspruch 1 oder 2, wobei der Werkzeugkopf (3) einen Außendurchmesser bis zu 6 mm und zumindest vier über den Umfang des Werkzeugkopfs (3) angeordnete Werkzeugschneiden (15) aufweist.

4. Werkzeug nach einem der vorhergehenden Ansprüche, **dadurch gekennzeichnet, dass** in einem Schichtaufbau des Hartmaterials die Schichten untereinander versintert sind.

5. Werkzeug nach einem der vorhergehenden Ansprüche, **dadurch gekennzeichnet, dass** zum Werkzeugkopf (3) beabstandet in Längsrichtung des Werkzeugs (1) eine Nachbearbeitungseinheit am Werkzeugschaft (7) ausgebildet ist.

6. Werkzeug nach einem der vorhergehenden Ansprüche, **dadurch gekennzeichnet, dass** in Richtung der Längsachse (S) die Länge (l₁) des Einspannabschnitts (4) mehr beträgt als die Hälfte der Länge (l₂), die sich in Richtung der Längsachse (S) zwischen dem Absatz (9) und dem hinteren Ende des Einspannabschnitts (4) ergibt.

## Claims

1. Tool (1) for chip-removing processing which has a tool head (3) having tool blades (15) which comprise the material of the tool head and a tool shaft (4, 7, 8) having a cylindrical clamping portion (4) which is constructed so as to be received in a tool receiving member and which tapers at the front end thereof via a rounded conical portion to a cylindrical extension portion (7) which is arranged concentrically relative to the clamping portion,
wherein the tool head (3) is fitted as a separate component to the tool shaft (4, 7., 8) and integrally comprises a hard material having at least one functional layer which comprises a super hard material, such as, for example, CBN or PCD, wherein there is produced at the front end of the extension portion (7) a stud portion (8) which is arranged concentrically relative thereto and which has a circular cross-section and a planar end face (10) which is constructed at the front end thereof and which is orientated substantially perpendicularly to a longitudinal axis (S) and which has a shoulder (9) having an annular counter-face (13) which surrounds the stud portion (8),
**characterised in that** the tool head (3) has at the rear end thereof a recess which is constructed as a cylindrical blind hole (11) having a base face (14) and an annular abutment face (12) which surrounds the blind hole (11), and is fitted to the stud portion (8),
and **in that**, when the tool head (3) is completely fitted to the stud portion (8), the annular abutment face (12) abuts the annular counter-face (13) of the shoulder (9) in a flush manner or at least in a practically gap-free manner.

2. Tool (1) according to claim 1, **characterised in that**, for a soldering or bonding connection of the tool head (3) with respect to the stud portion (8), (a) a gap region which may occur between the abutment face (12) and the counter-face (13), (b) a circumferential annular gap which is formed by the dimensions of the stud portion (8) or the blind hole (11) between the circumferential outer side of the stud portion (8) and the inner wall of the blind hole (11) and (c) a gap which is formed between the end face (10) of the stud portion (8) and the base face (14) of the blind hole (11) is filled with soldering or bonding material.

3. Tool according to claim 1 or claim 2, wherein the tool head (3) has an outer diameter up to 6 mm and at least four tool blades (15) which are arranged over the circumference of the tool head (3).

4. Tool according to any one of the preceding claims, **characterised in that** the layers are sintered relative to each other in a layered construction of the hard material.

5. Tool according to any one of the preceding claims, **characterised in that** a subsequent processing unit is constructed on the tool shaft (7) with spacing relative to the tool head (3) in the longitudinal direction of the tool (1).

6. Tool according to any one of the preceding claims, **characterised in that** the length (l₁) of the clamping portion (4) is greater in the direction of the longitudinal axis (S) than half of the length (l₂) which is produced in the direction of the longitudinal axis (S) between the shoulder (9) and the rear end of the clamping portion (4).

## Revendications

1. Outil (1) servant à l'usinage par enlèvement de copeaux, lequel présente une tête d'outil (3) pourvue de lames d'outil (15) constituées du matériau de la tête d'outil, ainsi qu'une tige d'outil (4, 7, 8), pourvue d'une section de serrage (4) cylindrique, qui est réalisée afin d'être reçue dans un porte-outil et qui se rétrécit au niveau de son extrémité avant sur une section tronconique en direction d'une section de prolongement (7) cylindrique, qui est disposée de manière concentrique par rapport à la section de serrage, sachant que la tête d'outil (3) est installée sous la forme d'une pièce séparée au niveau de la tige d'outil (4, 7, 8) et est constituée d'un seul tenant d'un matériau dur avec au moins une couche fonctionnelle, qui comprend une substance super dure telle que le CBN ou le PCD,
sachant que, au niveau de l'extrémité avant de la section de prolongement (7), une section de tenon (8) disposée de manière concentrique par rapport à celle-ci pourvue d'une section transversale circulaire et d'une face frontale (10) plane réalisée au niveau de son extrémité avant et orientée essentiellement de manière perpendiculaire par rapport à un axe longitudinal (S) et d'un retrait (9) pourvu d'une face complémentaire (13) de forme annulaire entourant la section de tenon (8) est réalisée,
**caractérisé en ce que** la tête d'outil (3) présente, au niveau de son extrémité arrière, un renfoncement réalisé sous la forme d'un alésage borgne (11) cylindrique pourvu d'une face de base (14) et une face d'appui (12) de forme annulaire entourant l'alésage borgne (11) et est enfichée sur la section de tenon (8),
et que, lorsque la tête d'outil (3) est intégralement enfichée sur la section de tenon (8), la face d'appui (12) de forme annulaire se trouve au même niveau ou au moins quasiment sans interstice par rapport à la face complémentaire (13) de forme annulaire du retrait (9).

2. Outil (1) selon la revendication 1, **caractérisé en ce que** sont remplies d'un matériau de brasage ou de collage, en vue d'un assemblage par brasage ou par collage de la tête d'outil (3) au niveau de la section de tenon (8), (a) une zone de fente se formant éventuellement entre la face d'appui (12) et la face complémentaire (13), (b) une fente annulaire périphérique réalisée, du fait des dimensions de la section de tenon (8) ou de l'alésage borgne (11), entre le côté extérieur périphérique de la section de tenon (8) et la paroi intérieure de l'alésage borgne (11) et (c) une fente formée entre la face frontale (10) de la section de tenon (8) et la face de base (14) de l'alésage borgne (11).

3. Outil selon la revendication 1 ou 2, sachant que la tête d'outil (3) présente un diamètre extérieur pouvant aller jusqu'à 6 mm et au moins quatre lames d'outil (15) disposées sur la périphérie de la tête d'outil (3).

4. Outil selon l'une quelconque des revendications précédentes, **caractérisé en ce que** les couches sont frittées les unes sous les autres selon une structure de couche du matériau dur.

5. Outil selon l'une quelconque des revendications précédentes, **caractérisé en ce qu'**une unité d'usinage ultérieur est réalisée au niveau de la tige d'outil (7) à distance de la tête d'outil (3) dans le sens de la longueur de l'outil (1).

6. Outil selon l'une quelconque des revendications précédentes, **caractérisé en ce que** la longueur (l₁) de la section de serrage (4) présente une valeur supérieure à la moitié de la longueur (12) obtenue dans le sens de l'axe longitudinal (S) entre le retrait (9) et l'extrémité arrière de la section de serrage (4) dans le sens de l'axe longitudinal (S).
